(19) **Europäisches Patentamt / European Patent Office / Office européen des brevets**

(11) **EP 3 693 609 B1**

(12) **FASCICULE DE BREVET EUROPEEN**

(45) Date de publication et mention de la délivrance du brevet:
**22.05.2024 Bulletin 2024/21**

(21) Numéro de dépôt: **20155887.1**

(22) Date de dépôt: **06.02.2020**

(51) Classification Internationale des Brevets (IPC):
*F04D 19/02* (2006.01)    *F04D 27/00* (2006.01)
*F04D 29/32* (2006.01)    *F04D 29/54* (2006.01)
*G01M 9/06* (2006.01)

(52) Classification Coopérative des Brevets (CPC):
**F04D 27/001; F04D 19/02; F04D 29/324;
F04D 29/542; G01M 9/065; G01M 15/14**

(54) **MESURE DE PRESSION TOTALE ET TEMPÉRATURE TOTALE DANS UNE TURBOMACHINE**

MESSUNG DES GESAMTDRUCKS UND DER GESAMTTEMPERATUR IN EINEM TURBOTRIEBWERK

MEASUREMENT OF TOTAL PRESSURE AND TOTAL TEMPERATURE IN A TURBINE ENGINE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **08.02.2019 BE 201905078**

(43) Date de publication de la demande:
**12.08.2020 Bulletin 2020/33**

(73) Titulaire: **Safran Aero Boosters SA
4041 Herstal (BE)**

(72) Inventeurs:
• **RAIMARCKERS, Nicolas
4041 Herstal (BE)**

• **VALLINO, Frédéric
4041 Herstal (BE)**

(74) Mandataire: **Lecomte & Partners
76-78, rue de Merl
2146 Luxembourg (LU)**

(56) Documents cités:
GB-A- 2 452 026    JP-A- S6 248 999
US-A- 2 750 734    US-A- 4 733 975
US-A- 5 508 943    US-A1- 2011 112 797
US-A1- 2017 218 841

**Description**

L'invention a trait au domaine des turbomachines et plus particulièrement au domaine du contrôle de fonctionnement de turbomachine.

Une turbomachine axiale comprend classiquement un compresseur, une chambre de combustion et une turbine. Cette dernière assure la mise en mouvement du compresseur. Le compresseur est constitué d'une alternance de rangées d'aubes statoriques et d'aubes rotoriques, une rangée d'aubes rotoriques suivie d'une rangée d'aubes statoriques formant un étage de compression. Similairement, une turbine est constituée d'une alternance de rangées d'aubes statoriques et d'aubes rotoriques, une rangée d'aubes statoriques suivie d'une rangée d'aubes rotoriques formant un étage de détente. D'un point de vue énergétique, la rangée d'aubes rotoriques, c'est-à-dire mobiles, assure le transfert d'énergie entre la machine et le fluide alors que la rangée d'aubes statoriques, c'est-à-dire fixes, ne réalise qu'une transformation interne de la forme d'énergie du fluide. Bien qu'il existe des forces entre le fluide et les aubes statoriques, celles-ci étant fixes, elles ne travaillent pas. Dans le cas du compresseur, la rangée d'aubes statoriques située en aval de la rangée d'aubes rotoriques, ou roue mobile, est appelée redresseur. Dans le cas de la turbine, la rangée d'aubes statoriques située en amont de la roue mobile est appelée distributeur. Le compresseur est parcouru d'air et la turbine est parcourue par de l'air et des produits de combustion. En d'autres termes, le fluide parcourant la turbomachine est un gaz sujet à des variations de vitesse et des variations de pression.

Le document de brevet publié GB 811,854 divulgue une turbomachine axiale équipée d'une mesure de la différence entre la pression totale et la pression statique dans une rangée d'aubes statoriques. Cette mesure sert à piloter le débit d'air au travers de la turbomachine. La pression totale est mesurée en formant un canal dans l'épaisseur de l'aube, partant du bord d'attaque. La pression statique est mesurée au niveau de la paroi interne ou externe du carter de compresseur, au niveau de la rangée d'aubes statoriques, entre deux aubes voisines.

Le document de brevet publié US 2011/0112797 A1 a trait à un procédé de contrôle du rendement d'un turbocompresseur multi-étage pour un procédé de traitement d'un fluide. Plus spécifiquement, le rendement polytropique de chaque étage est calculé sur base des températures et pressions d'entrée et de sortie ainsi qu'une mesure du débit. Le turbocompresseur est par ailleurs équipé d'un étage de refroidissement entre chacun des étages de compression. Le calcul de rendement polytropique peut par ailleurs être amélioré en tenant compte d'une équation de gaz réel par opposition à l'équation d'un gaz parfait, sans toutefois préciser l'équation de gaz réel (Clausius, Dieterici, van de Waals, ou autre).

Le document de brevet publié JP S 62-48999 A a trait à procédé de contrôle d'un compresseur centrifuge multi-étage entrainé par un moteur électrique et traversé par de l'éthylène en vue de la production d'éthylène à partir de gaz de craquage de pétrole. Le procédé de contrôle est conçu pour éviter un phénomène de pompage des différents étages de compression, tenant compte du coefficient adiabatique ou de Laplace de l'éthylène.

Le document de brevet publié JP H 10132842 A a trait à un tube de Pitot à plusieurs canaux, en forme de L, apte à être disposé entre deux aubes statoriques d'une turbomachine axiale. Afin de perturber le moins possible le flux gazeux, l'extrémité de mesure de la pression totale dans le flux gazeux comprend plusieurs canaux disposés de manière essentiellement circulaire. Dans la partie plus en arrière du tube de Pitot, les canaux s'évasent pour prendre une configuration où ils sont côte-à-côte suivant une direction transversale.

Les mesures de pression totale réalisées suivant les enseignements ci-avant manquent de permettre une détermination détaillée du fonctionnement de la turbomachine.

L'invention a pour objectif de pallier au moins un des inconvénients de l'état de la technique susmentionné. Plus particulièrement, l'invention a pour objectif de permettre de déterminer les conditions de fonctionnement thermodynamique d'une turbomachine axiale, plus particulièrement d'un compresseur d'une telle machine.

L'invention a pour objet un procédé de test et/ou de contrôle de fonctionnement d'une turbomachine axiale traversée par une veine gazeuse, comprenant les actions suivantes : mesure de paramètres de fonctionnement de la turbomachine, lesdits paramètres comprenant la pression dans la veine gazeuse à différentes positions axiales ; calcul de conditions de fonctionnement de la turbomachine à partir des paramètres mesurés et du coefficient de Laplace $\gamma$ du gaz traversant la turbomachine ; remarquable en ce que la mesure de paramètres comprend une mesure de température de la veine gazeuse ; et le calcul de conditions de fonctionnement comprend une détermination du coefficient de Laplace $\gamma$ sur base de la mesure de la température de la veine gazeuse.

Selon un mode avantageux de l'invention, la mesure de température de la veine gazeuse est réalisée dans un ou plusieurs tubes de Pitot.

Selon un mode avantageux de l'invention, au moins une des mesures de pression est réalisée dans le ou au moins un des tubes de Pitot.

Selon un mode avantageux de l'invention, le ou au moins une des tubes de Pitot est situé à l'intérieur de la turbomachine entre deux étages de compression ou entre deux étages de détente.

Selon un mode avantageux de l'invention, la mesure de température comprend la température statique $T$ et la température totale $T_t$ et la mesure de pression comprend la pression statique $p$ et la pression totale $p_t$, le coefficient

de Laplace $\gamma$ étant déterminé par la relation :

$$\frac{p}{p_t} = \left(\frac{T}{T_t}\right)^{\frac{\gamma}{\gamma-1}}$$

Selon un mode avantageux de l'invention, le calcul de conditions de fonctionnement comprend un calcul du rendement $\eta_{c\ étage}$ d'un étage de compression de la turbomachine suivant la relation :

$$\eta_{c\ étage} = \frac{T_{01}\left(\left(\frac{p_{03}}{p_{01}}\right)^{\frac{\gamma-1}{\gamma}} - 1\right)}{T_{03} - T_{01}}$$

où $T_{01}$ est la température totale mesurée à l'entrée de l'étage de compression, $p_{03}$ est la pression totale mesurée à la sortie de l'étage de compression, et $p_{01}$ est la pression mesurée à l'entrée de l'étage de compression.

L'invention a également pour objet un compresseur de turbomachine axiale, comprenant plusieurs étages de compression, chaque étage comprenant une rangée d'aubes rotoriques apte à accélérer une veine d'air le traversant, suivie d'une rangée d'aubes statoriques apte à redresser ledit flux d'air ; et une unité de contrôle ; remarquable en ce que le compresseur comprend, en outre, au moins un capteur de température de la veine d'air, situé entre deux étages de compression ; et en ce que l'unité de contrôle est configurée pour déterminer le coefficient de Laplace $\gamma$ de l'air sur base de la mesure de la température de la veine d'air.

Selon un mode avantageux de l'invention, le ou chacun des capteurs de température est situé dans un tube de Pitot disposé dans la veine d'air.

Selon un mode avantageux de l'invention, le compresseur comprend un carter extérieur délimitant la veine d'air et supportant les aubes statoriques, le ou au moins un des tubes de Pitot est disposé sur une face intérieure du carter et entre deux aubes statoriques adjacentes d'une même rangée.

Selon un mode avantageux de l'invention, au moins une des aubes comprend un corps avec deux faces aérodynamiques opposées l'une à l'autre et un bord d'attaque et un bord de fuite, lesdits bords reliant les deux faces aérodynamiques ; et le tube de Pitot débouche au niveau du bord d'attaque.

Selon un mode avantageux de l'invention, le tube de Pitot comprend un conduit avec un orifice d'entrée pour le fluide, ledit conduit étant inséré dans le corps ou formé par le corps.

Selon un mode avantageux de l'invention, le ou chacun des tubes de Pitot est une antenne de Prandtl équipée de capteurs pour mesurer la pression statique, la pression totale, la température statique et la température totale.

Selon un mode avantageux de l'invention, l'antenne de Prandtl comprend une première chambre apte à mesurer la pression et la température totale du fluide et une deuxième chambre apte à mesurer la pression et la température statique dudit fluide.

Selon un mode avantageux de l'invention, les capteurs de mesure de la pression et la température statiques, et/ou les capteurs de mesure de la pression et de la température totale sont combinés sur un seul composant, respectivement.

Selon un mode avantageux de l'invention, le coefficient de Laplace $\gamma$ est déterminé par la relation :

$$\frac{p}{p_t} = \left(\frac{T}{T_t}\right)^{\frac{\gamma}{\gamma-1}}$$

où $T$ est la température statique, $T_t$ la température totale, et $p$ la pression statique et $p_t$ la pression totale.

Selon un mode avantageux de l'invention, l'unité de contrôle est configurée pour calculer un rendement $\eta_{c\ étage}$ d'au moins un étage de compression de la turbomachine suivant la relation :

$$\eta_{c\ étage} = \frac{T_{01}\left(\left(\frac{p_{03}}{p_{01}}\right)^{\frac{\gamma-1}{\gamma}} - 1\right)}{T_{03} - T_{01}}$$

où $T_{01}$ est la température totale mesurée à l'entrée du ou des étages de compression, $p_{03}$ est la pression totale mesurée à la sortie du ou des étages de compression, et $p_{01}$ est la pression mesurée à l'entrée du ou des étages de compression.

D'autres caractéristiques et avantages de la présente invention seront mieux compris à l'aide de la description et des dessins parmi lesquels :

- La figure 1 est une vue en coupe longitudinale d'une turbomachine axiale conforme à l'invention.
- La figure 2 est une vue en coupe longitudinale du compresseur basse-pression de la turbomachine axiale de la figure 1, ledit compresseur étant conforme à l'invention.
- La figure 3 est une vue schématique en coupe d'un tube de Pitot intégré sur une des aubes de la turbomachine des figures 1 et 2.
- La figure 4 est une vue schématique en coupe d'un tube de Pitot entre deux aubes de la turbomachine des figures 1 et 2.
- La figue 5 est une vue de côté d'une aube (rotorique ou statorique) du compresseur de la turbomachine des figures 1 et 2, montrant l'intégration d'un tube de Pitot, conformément à l'invention.
- La figure 6 est une vue de face de l'aube (rotorique ou statorique) de la figure 5.

Dans la description qui va suivre, les termes « intérieur », « interne », « extérieur » et « externe » renvoient à un positionnement par rapport à l'axe de rotation d'une turbomachine axiale.

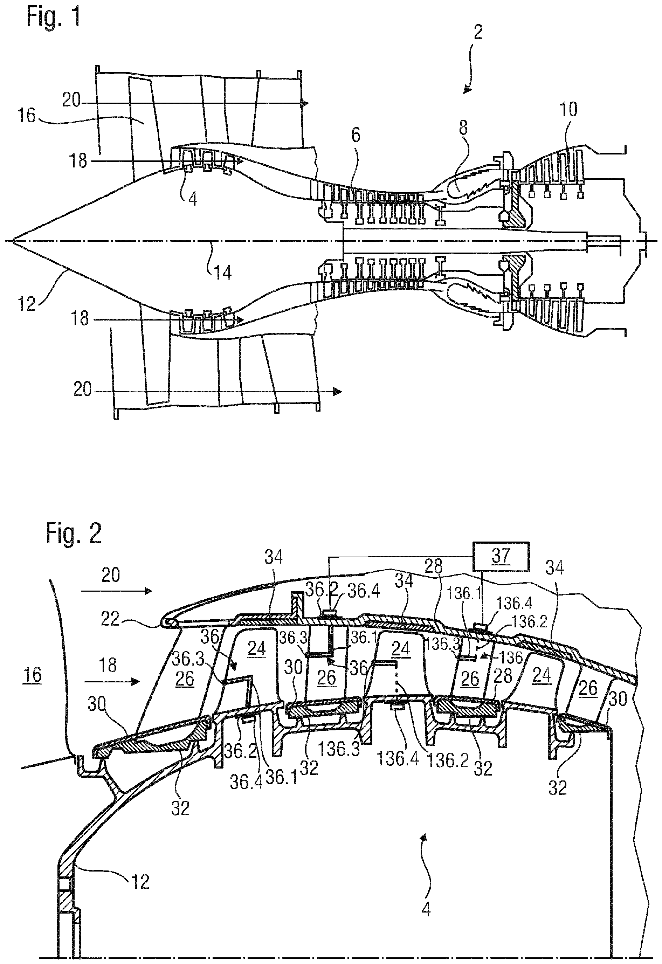

La figure 1 est une vue en coupe longitudinale d'une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Des moyens de démultiplication peuvent augmenter la vitesse de rotation transmise aux compresseurs. Les différents étages de turbines peuvent être reliés séparément aux étages de compresseur via des arbres concentriques. Les compresseurs 4 et 6 comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée de la chambre de combustion 10.

Un ventilateur d'entrée communément désigné « fan » 16 est couplé au rotor 12 et génère un flux d'air qui se divise en un flux primaire 18 traversant les différents niveaux sus mentionnés de la turbomachine, et un flux secondaire 20 traversant un conduit annulaire (partiellement représenté) le long de la machine pour ensuite rejoindre le flux primaire en sortie de turbine. Les flux primaire 18 et secondaire 20 sont des flux annulaires, ils sont canalisés par le carter de la turbomachine. A cet effet, le carter présente des parois cylindriques ou viroles qui peuvent être internes et externes.

La figure 2 est une vue en coupe d'un compresseur basse-pression 4 d'une turbomachine axiale 2 telle que celle de la figure 1. On peut y observer une partie du fan 16 et le bec de séparation 22 du flux primaire 18 et du flux secondaire 20. Le rotor 12 comprend plusieurs rangées d'aubes rotoriques 24, par exemple trois.

Le compresseur basse-pression 4 comprend plusieurs redresseurs, par exemple quatre, qui contiennent chacun une rangée d'aubes statoriques 26. Les redresseurs sont associés au fan 16 ou à une rangée d'aubes rotoriques 24 pour redresser le flux d'air, de sorte à convertir la vitesse du flux en pression.

Les aubes statoriques 26 s'étendent essentiellement radialement depuis un carter extérieur 28. Elles sont régulièrement espacés les unes des autres, et présentent généralement une même orientation angulaire dans le flux.

Les redresseurs comprennent, chacun, une virole interne 30 permettant de guider le flux primaire 18. Les viroles 30 présentent, chacune, une rangée annulaire d'ouvertures. Ces dernières sont réparties de manière homogène sur le pourtour des viroles internes et sont traversées par les extrémités intérieures des aubes en vue d'y fixer la virole. Les viroles internes 30 présentent une section en forme de la lettre « U », dont la partie creuse est orientée vers l'intérieur. Les viroles internes 30 peuvent être réalisées en métal, par exemple en alliage de titane, ou en matériau composite.

Les redresseurs comportent chacun une couche annulaire de matériau abradable 32 logée dans le creux des viroles internes 30. Les couches d'abradable 32 peuvent être d'épaisseur sensiblement constantes, de manière à former une bande. Ces couches d'abradable 32 sont destinées à coopérer par abrasion avec des léchettes ou ailettes circonférentielles de sorte à assurer une étanchéité. Les couches en matériau abradable assurent un remplissage et peuvent être structurants.

Le carter 28 comprend également des rainures circulaires remplies de matériau abradable 34 au droit des extrémités des aubes rotoriques 24, destinées à réaliser une étanchéité tout en permettant un contact occasionnel des aubes.

Le compresseur 4 est constitué de plusieurs étages de compression, chaque étage comprenant une rangée d'aubes rotoriques 24 suivie d'une rangée d'aubes statoriques 26. La rangée d'aubes rotoriques 24 est couramment appelé roue mobile et la rangée d'aubes statoriques 26 est couramment appelée redresseur ou roue fixe. La roue mobile accélère le fluide et le redresseur convertit une partie de la vitesse du fluide en pression. Une mesure de la pression et de la température de la veine gazeuse au sein d'un étage de compression permet de déterminer les transformations de fluide qui y ont lieu et, partant, d'en déterminer le rendement. Processus de transformation impliquent l'utilisation du coefficient de Laplace $\gamma$ qui est

$$\gamma = \frac{C_p}{C_v}$$

où $C_p$ est la chaleur massique à pression constante et $C_v$ est la chaleur massique à température constante. Or l'air, dans une plage de température allant d'environ 273°K jusqu'à environ 1500°K, peut être considéré comme un gaz réel dont la chaleur massique à pression constante $C_p$ ne dépend que de la température. La chaleur massique à pression constante $C_p$ a une valeur croissante avec la température, ce qui signifie que le coefficient de Laplace y a quant à lui une valeur décroissante avec la température. La valeur du coefficient de Laplace $\gamma$ est proche de 1.4 à des températures entre 200°K et 400°K, si bien que dans la plupart des calculs, il est considéré comme constant et la valeur de 1.4 est utilisée.

Cependant, comme cela va être démontré ci-après, certains calculs de paramètres de fonctionnement, comme notamment celui du rendement isentropique, dépendent de manière sensible du coefficient de Laplace $\gamma$.

En effet, le rendement d'un étage de compression $\eta_c$ est :

$$\eta_c = \frac{h_{03is} - h_{01}}{h_{03} - h_{01}}$$

où $h_{01}$ est l'enthalpie d'arrêt ou totale à l'entrée de l'étage, $h_{03}$ est l'enthalpie d'arrêt ou totale à la sortie de l'étage, et $h_{03is}$ l'enthalpie d'arrêt ou totale à la sortie de l'étage dans le cas d'une transformation isentropique, c'est-à-dire en l'absence de frottements. Les variations d'enthalpie considérées ici pour le calcul du rendement correspondent ici à la puissance utile échangée, car on considère que ces transformations de fluide dans le compresseur sont adiabatiques, c'est-à-dire sans échange de chaleur. Dans une transformation adiabatique, la variation d'enthalpie se calcule comme suit :

$$\Delta H_0 = C_p \Delta T_0 = C_p(T_{03} - T_{01}) = C_p T_{01}\left(\frac{p_{03}}{p_{01}}^{\frac{\gamma-1}{\gamma}} - 1\right)$$

On obtient alors

$$\eta_c = \frac{T_{03is} - T_{01}}{T_{03} - T_{01}} = \frac{T_{01}\left(\frac{T_{03is}}{T_{01}} - 1\right)}{T_{03} - T_{01}} = \frac{T_{01}\left(\left(\frac{p_{03}}{p_{01}}\right)^{\frac{\gamma-1}{\gamma}} - 1\right)}{T_{03} - T_{01}}$$

Si on dérive le rendement $\eta_c$ par le coefficient de Laplace $\gamma$, on obtient :

$$\frac{d\eta_c}{d\gamma} = \frac{1}{\gamma^2}\frac{T_{01}}{T_{03} - T_{01}} ln\frac{p_{03}}{p_{01}}\left(\frac{p_{03}}{p_{01}}\right)^{\frac{\gamma-1}{\gamma}}$$

Si on considère les valeurs suivantes : $T_{01}$ = 70°C, $T_{03}$ = 180°C, $\frac{p_{03}}{p_{01}} = 2.5$ , on obtient

$$\frac{d\eta_c}{d\gamma} = \frac{2.857}{\gamma^2}(2.5)^{\frac{\gamma-1}{\gamma}}$$ et pour y = 1.4

$$\frac{d\eta_c}{d\gamma} = 1.894$$

On constate ainsi que la valeur du coefficient de Laplace $\gamma$ a une influence directe et importante sur le calcul du rendement de l'étape de compression, à savoir qu'une erreur donnée de détermination du coefficient de Laplace $\gamma$ causera une erreur presque double sur le calcul du rendement. Il est par conséquent particulièrement intéressant de mesurer la température totale ainsi que la pression totale du fluide, en l'occurrence l'air, à l'entrée et à la sortie de l'étage de compression.

Il est entendu que ce qui vient d'être détaillé ci-avant s'applique également à un étage de détente, à cette

$$\eta_T = \frac{1}{\eta_c}$$

différence près que le rendement d'un étage de turbine . Il est aussi entendu que ce qui vient d'être décrit ci-avant s'applique également à une roue mobile (de compression ou de détente) et à une roue fixe (également de compression ou de détente), auquel cas les valeurs de pression et de température totales sont mesurées à l'entrée et à la sortie de ladite roue.

A la figure 2 on peut observer que la première rangée d'aubes rotoriques 24 est équipée d'un tube de Pitot 36 disposé entre deux aubes voisines. Le tube de Pitot 36 comprend essentiellement un corps 36.1 en forme générale de coude ou encore de L, un support 36.2 auquel est fixé le corps 36.1 et assurant la fixation du tube de Pitot au rotor 12. Le corps 36.1 comprend ainsi une portion s'étendant généralement radialement entre les deux aubes voisines, depuis la paroi du rotor 12 délimitant la surface intérieure de la veine fluide, et une portion s'étendant généralement axialement en amont par rapport à l'écoulement de l'air dans le compresseur. Cette portion axiale comprend à son extrémité distale et amont une ouverture ou orifice d'entrée 36.3 destinée à être en communication fluidique avec l'air s'écoulant dans le compresseur 4. Moyennant un capteur ou plusieurs capteurs de pression et/ou de température, la pression statique, la pression dynamique ou totale, la température statique et/ou la température dynamique ou totale peuvent être ainsi mesurées. L'orifice d'entrée 36.3 est avantageusement disposé axialement à hauteur du bord d'attaque des aubes 24 de la rangée d'aubes en question. Il est cependant entendu qu'il est envisageable de prévoir d'autres positions axiales, à savoir notamment en amont dudit bord d'attaque ou encore en aval. La hauteur radiale de l'orifice d'entrée 36.3 peut également être variée depuis une position radiale intérieure, c'est-à-dire au niveau des pieds d'aubes, adjacente à la paroi du rotor 12 délimitant la surface intérieure de la veine fluide, jusqu'à une position radiale extérieure, c'est-à-dire au niveau des extrémités d'aubes, adjacente à la paroi du stator 28 délimitant la surface extérieure de la veine fluide. Avantageusement, l'orifice d'entrée 36.3 est situé à une position radiale intermédiaire afin de mesurer les conditions de l'écoulement d'air à distance radialement des parois intérieure et extérieure de la veine fluide.

Le tube de Pitot 36 peut également comprendre une unité de transmission de signal 36.4 avantageusement située sur le support 36.2. La transmission des signaux correspondant aux valeurs mesurées peut être réalisée de manière filaire ou sans fil. Lorsque le tube de Pitot 36 est disposé sur le rotor 12, il est avantageux de réaliser cette transmission sans fil en raison de la difficulté à prévoir une connexion filaire vers le stator.

Encore en référence à la figure 2, on peut observer que la deuxième rangée d'aubes statoriques 26 est équipée, similairement à la première rangée d'aubes rotoriques 24 détaillée ci-avant, d'un tube de Pitot 36. Ce dernier est de construction similaire à celui de la première rangée d'aubes rotoriques 24, à cette différence près qu'il est inversé radialement, à savoir que le corps s'étend radialement depuis la paroi du stator 28 délimitant la surface extérieure de la veine fluide vers la paroi du rotor 12 délimitant la surface intérieure de la veine fluide. Le support 36.2 est alors fixé à la paroi du stator 28. L'orifice d'entrée 36.3 quant à lui est avantageusement situé axialement à hauteur des bords d'attaque des aubes 26 en question. Cette position axialement peut cependant être variée vers l'amont et/ou vers l'aval, afin notamment de ne pas prendre en compte ou de prendre en compte certains phénomènes aérodynamiques se manifestant au niveau des bords d'attaque en question. Pour ce qui est de la position radiale, similairement au tube de Pitot disposé dans la première rangée d'aubes rotoriques 24 détaillée ci-avant, celle-ci peut varier entre une position extérieure adjacente à la paroi du stator 28 jusqu'à la paroi du rotor 12, étant entendu qu'il est avantageux de prévoir une position intermédiaire pour éviter de prendre en compte des phénomènes causés par des conditions d'écoulement limite le long de ces parois fixes axialement par rapport à l'écoulement de la veine fluide.

Il est intéressant de remarquer que les deux tubes de Pitot 36 qui viennent d'être décrits, à savoir l'un avec son orifice d'entrée site axialement au niveau des bords d'attaque des aubes rotoriques 24 et l'autre avec son orifice d'entrée situé axialement au niveau des bords d'attaque des aubes statoriques 26, permettent de connaître les conditions de l'écoulement de fluide à l'entrée et à la sortie de la première rangée d'aubes rotoriques 24. En référence à la discussion faite ci-avant en relation avec le calcul de rendement, il est ainsi possible par les mesures de pression et températures totales de déterminer le rendement non seulement d'un étage de compression mais également d'une roue fixe ou mobile seul, ou encore d'un groupement d'étages. Il est alors nécessaire de mesurer les pressions et températures totales à l'entrée et à la sortie de la partie de turbomachine à laquelle on s'intéresse.

Encore en référence à la figure 2, on peut observer que la deuxième rangée d'aubes rotoriques 24 et la troisième rangée d'aubes statoriques 26 comportent, chacune, un tube de Pitot 136 intégré dans une des aubes 24 et 26. En effet, en alternative et/ou en complément au(x) tube(s) de Pitot 36 disposé(s) entre deux aubes voisines, on peut prévoir d'intégrer un tube de Pitot 136 dans une aube ou sur une aube. Il est en effet envisageable de prévoir un corps formant un conduit 136.1 formé dans l'épaisseur de l'aube, notamment totalement dans l'épaisseur ou encore partiellement. Dans ce dernier cas, le conduit peut ressortir d'une des faces intrados ou extrados de l'aube 24 et 26. L'orifice d'entrée 136.3 est avantageusement au niveau du bord d'attaque de l'aube en question. Moyennant un capteur ou plusieurs capteurs de pression et/ou de température logé(s) dans le conduit ou au niveau du pied d'aube en connexion fluidique avec le conduit, la pression statique, la pression dynamique ou totale, la température statique et/ou la température dynamique ou totale peuvent être ainsi mesurées. Le ou les capteurs peuvent être reliés électriquement par les câbles ou pistes 136.2 à une unité de transmission de signal 136.4 avantageusement située en face du pied d'aube.

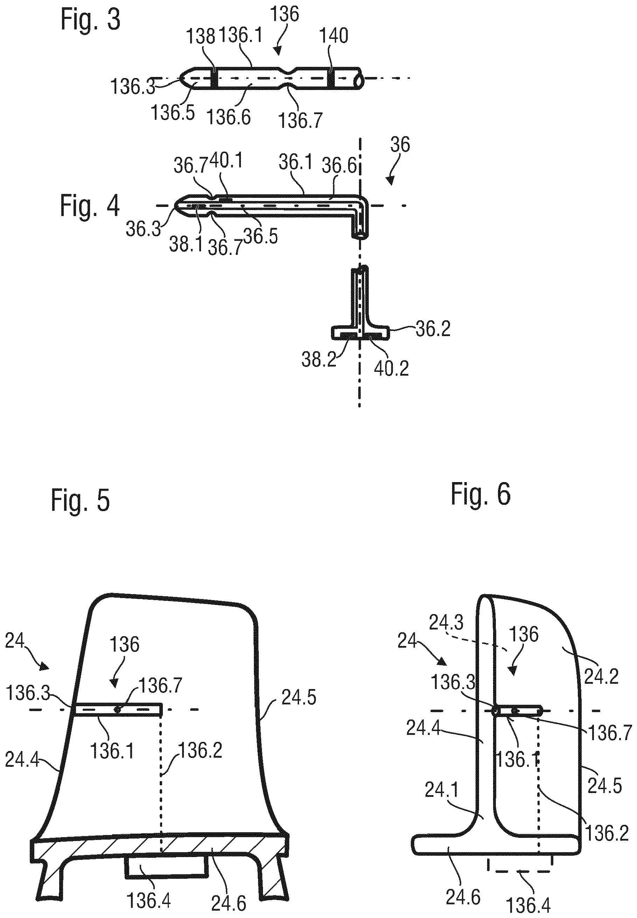

La construction des tubes de Pitot va être détaillée en relation avec les figures 3 à 6.

La figure 3 est une vue détail d'un tube de Pitot 136 intégré dans une aube, l'aube n'étant toutefois pas illustré. On peut observer que le tube de Pitot 136 comprend un corps 136.1 formant un conduit avec un orifice entrée 136.3 en face de l'écoulement fluidique.

Un premier capteur 138 est disposé dans le conduit de manière à délimiter une première chambre 136.5 en contact avec l'orifice d'entrée 136.3. Lors d'un écoulement de fluide en direction de l'orifice d'entrée 136.3, le fluide est décéléré jusqu'à l'arrêt (approximativement) dans cette première chambre 136.5 de sorte que la totalité de la vitesse du fluide est convertie en pression par application du principe de conservation d'énergie exprimé par la loi de Bernoulli. Cette compression s'opère dans des conditions assimilables à des conditions adiabatiques, c'est-à-dire sans échange de chaleur, ce qui va conduire à une augmentation de sa température, par application du principe de la loi des gaz parfaits. Dans la première chambre 136.5 vont alors régner la pression totale et la température totale du fluide. Le capteur 138 est avantageusement un capteur combiné apte à mesurer la pression et la température. Il peut également s'agir de deux capteurs distincts mis côte-à-côte.

Un deuxième capteur 140 est disposé dans une deuxième chambre 136.6 située à l'arrière et en aval de la première chambre 136.5. Cette chambre est délimitée par le deuxième capteur 140 et est ouverte vers l'extérieur via le ou les orifices 136.7. Celui-ci ou ceux-ci sont disposés sur la paroi longitudinale du conduit, cette paroi étant destinée à être orientée parallèlement à l'écoulement du fluide. La deuxième chambre est ainsi en contact fluidique avec l'extérieur sans pour autant convertir son énergie cinétique en pression et température comme dans la première chambre 136.5. Dans la deuxième chambre 136.6 vont alors régner la pression statique et la température statique du fluide. Le tube de Pitot forme ainsi une antenne de Prandtl. Le capteur 140 est avantageusement un capteur combiné apte à mesurer la pression et la température. Il peut également s'agir de deux capteurs distincts mis côte-à-côte, similairement au premier capteur 138.

Des câbles ou pistes électriques sont alors prévues pour relier les capteurs 138 et 140 à une unité de transmission de signal 136.4 telle qu'illustrée schématique à la figure 2.

Bien que la configuration du tube de Pitot de la figure 3 soit illustrée dans le cadre de la configuration intégrée dans une aube, il est toutefois entendu qu'elle s'applique également à la configuration non intégrée, c'est-à-dire où le tube de Pitot s'étend entre deux aubes voisines. Dans ce cas, le conduit illustré à la figure 3 est porté par le corps du tube. Les câbles ou pistes électriques de connexion des capteurs passent alors avantageusement dans un passage formé dans le corps.

La figure 4 est une vue détail d'un tube de Pitot 36 destiné à être disposé entre deux aubes voisines. Le corps 36.1 allongé en forme de L, avec une portion s'étendant radialement (verticalement à la figure) et une portion s'étendant axialement (horizontalement à la figure), forme un double conduit, en l'occurrence deux conduits concentriques.

Le premier conduit forme une première chambre 36.5 débouchant vers l'extérieur à l'avant par l'orifice d'entrée 36.3. Similairement à ce qui a été expliqué ci-avant en relation avec la figure 3, le fluide s'écoulant vers l'orifice d'entrée 36.3 est décéléré dans la première chambre et y subit une compression et une augmentation de température. A cet effet, un premier capteur de température 38.1 est disposé dans la première chambre, avantageusement à proximité de l'orifice d'entrée 36.3 de manière à pouvoir mesurer la température totale du fluide. Le premier conduit formant une première chambre 36.5 s'étend le long du corps 36.1 jusqu'à la base 36.2 où un premier capteur de pression 38.2 peut être disposé. Cette configuration est intéressante en ce qu'elle permet de mesurer la température au plus près de la veine fluide tout en s'acquittant des difficultés de connexion du capteur de pression qui lui peut être situé davantage à distance de l'orifice d'entrée 36.3 sans perte significative de précision. Il est toutefois entendu que les deux capteurs 38.1 et 38.2 peuvent être plus proches l'un de l'autre. Ainsi, le capteur de pression 38.2 peut être adjacent au capteur de température 38.1 et l'orifice d'entrée 36.3 ou encore le capteur de température 38.1 peut être situé au niveau de la base, adjacent au capteur de pression 38.2.

Le deuxième conduit forme une deuxième chambre 36.6 entourant la première chambre 36.5 et débouchant vers l'extérieur via le ou les passages 36.7. Ceux-ci ont leur section essentiellement alignée avec la direction d'écoulement afin de ne pas décélérer de fluide dans la chambre en question, en vue d'y mesurer la pression et la température statique, le tube de Pitot formant ainsi une antenne de Prandtl. A cet effet, un deuxième capteur de température 40.1 est disposé dans la deuxième chambre 36.6, adjacent aux orifices 36.7, alors qu'un deuxième capteur de pression 40.2 est quant à lui, et similairement au premier capteur de pression 38.2, disposé au niveau de la base 36.2 dans la deuxième chambre 36.6. Cette configuration est intéressante en ce qu'elle permet de mesurer la température au plus près de la veine fluide tout en s'acquittant des difficultés de connexion du capteur de pression qui lui peut être situé davantage à distance de l'orifice d'entrée 36.3 sans perte significative de précision. Il est toutefois entendu que les deux capteurs 40.1 et 40.2 peuvent être disposés côte-à-côte.

Les figures 5 et 6 sont deux vues d'une aube rotorique 24 telle qu'illustrée à la figure 2, et équipée d'un tube de Pitot intégré 36, tel qu'illustré à la figure 3. Il est entendu que ce qui est présenté ici en relation avec une aube rotorique 24 est également valable pour une aube statorique 26.

L'aube 24 comprend un corps 24.1 avec deux faces aérodynamiques 24.2 et 24.3 opposées l'une à l'autre et reliées entre elles par les bords d'attaque 24.4 et 24.5. Les deux faces aérodynamiques 24.2 et 24.3 sont communément appelées intrados et extrados. Le corps 24.1 peut également former un pied 24.6 de l'aube.

On peut observer que le corps 36.1 formant le conduit est partiellement intégré dans l'épaisseur de l'aube, étant entendu qu'une intégration totale est également envisageable. En l'occurrence, le corps 36.1 du tube de Pitot ressort de la face intrados de l'aube, étant entendu qu'il peut être disposé sur la face opposée en encore en position centrale et ressortir de chacune des faces intrados et extrados. Les câbles ou pistes électriques 36.2 peuvent être noyés dans l'épaisseur de l'aube ou encore être fixées sur au moins une des faces en question de l'aube.

De manière générale, la mesure des pressions totale et statique ainsi que la mesure des températures totale et statique permet de déterminer le coefficient de Laplace y, également appelé coefficient adiabatique ou exposant adiabatique, du fluide traversant la machine. Ce coefficient est souvent assimilé à une constante dans les calculs thermodynamiques d'une turbomachine. Or, il varie avec la température, en passant approximativement de 1.4 à 200°K à 1.3 à 1800°K. Aussi, ces variations peuvent avoir une influence importante sur les résultats de certains calculs comme notamment ceux du rendement isentropique, comme cela a été démontré ci-avant).

**Revendications**

1. Procédé de test et/ou de contrôle de fonctionnement d'une turbomachine axiale (2) traversée par une veine gazeuse (18), comprenant les actions suivantes :

   - mesure de paramètres de fonctionnement de la turbomachine, lesdits paramètres comprenant la pression dans la veine gazeuse à différentes positions axiales ;
   - calcul de conditions de fonctionnement de la turbomachine à partir des paramètres mesurés et du coefficient de Laplace $\gamma$ du gaz traversant la turbomachine ;

   **caractérisé en ce que**

   la mesure de paramètres comprend une mesure de température de la veine gazeuse (18) ; et
   le calcul de conditions de fonctionnement comprend une détermination du coefficient de Laplace $\gamma$ sur base de la mesure de la température de la veine gazeuse (18).

2. Procédé selon la revendication 1, **caractérisé en ce que** la mesure de température de la veine gazeuse est réalisée dans un ou plusieurs tubes de Pitot (36 ; 136),et préférentiellement au moins une des mesures de pression est réalisée dans le ou au moins un des tubes de Pitot (36 ; 136).

3. Procédé selon la revendication 2, **caractérisé en ce que** le ou au moins un des tubes de Pitot (36) est situé à l'intérieur de la turbomachine entre deux étages de compression ou entre deux étages de détente.

4. Procédé selon l'une des revendications 1 à 3, **caractérisé en ce que** la mesure de température comprend la température statique $T$ et la température totale $T_t$, et la mesure de pression comprend la pression statique $p$ et la pression totale $p_t$, le coefficient de Laplace $\gamma$ étant déterminé par la relation :

$$\frac{p}{p_t} = \left(\frac{T}{T_t}\right)^{\frac{\gamma}{\gamma-1}}$$

**EP 3 693 609 B1**

**5.** Procédé selon l'une des revendications 1 à 4, **caractérisé en ce que** le calcul de conditions de fonctionnement comprend un calcul du rendement $\eta_{c\,étage}$ d'un étage de compression de la turbomachine suivant la relation :

$$\eta_{c\,étage} = \frac{T_{01}\left(\left(\frac{p_{03}}{p_{01}}\right)^{\frac{\gamma-1}{\gamma}} - 1\right)}{T_{03} - T_{01}}$$

où $T_{01}$ est la température totale mesurée à l'entrée de l'étage de compression, $p_{03}$ est la pression totale mesurée à la sortie de l'étage de compression, et $p_{01}$ est la pression mesurée à l'entrée de l'étage de compression.

**6.** Compresseur de turbomachine axiale (2), comprenant

- plusieurs étages de compression, chaque étage comprenant une rangée d'aubes rotoriques (24) apte à accélérer une veine d'air (18) le traversant, suivie d'une rangée d'aubes statoriques (26) apte à redresser ladite veine d'air ; et
- une unité de contrôle (37),
**caractérisé en ce que** le compresseur comprend, en outre :

- au moins un capteur de température (38.1, 40.1 ; 138, 140) de la veine d'air (18), situé entre deux étages de compression ; et **en ce que**

l'unité de contrôle est configurée pour déterminer le coefficient de Laplace y de l'air sur base de la mesure de la température de la veine d'air (18).

**7.** Compresseur (2) selon la revendication 6, **caractérisé en ce que** le ou chacun des capteurs de température (38.1, 40.1 ; 138, 140) est situé dans un tube de Pitot (36 ; 136) disposé dans la veine d'air (18).

**8.** Compresseur (2) selon la revendication 7, **caractérisé en ce que** ledit compresseur comprend un carter extérieur (28) délimitant la veine d'air (18) et supportant les aubes statoriques (26), le ou au moins un des tubes de Pitot (36) est disposé sur une face intérieure du carter et entre deux aubes statoriques adjacentes (26) d'une même rangée.

**9.** Compresseur (2) selon la revendication 6, **caractérisé en ce que** :

- au moins une des aubes (24) comprend un corps (24.1) avec deux faces aérodynamiques (24.2, 24.3) opposées l'une à l'autre et un bord d'attaque (24.4) et un bord de fuite (24.5), lesdits bords reliant les deux faces aérodynamiques (24.2, 24.3) ; et
- le tube de Pitot (136) débouche au niveau du bord d'attaque (24.4).

**10.** Compresseur (2) selon la revendication 9, **caractérisé en ce que** le tube de Pitot (136) comprend un conduit (136.1) avec un orifice d'entrée (136.3) pour le fluide, ledit conduit étant inséré dans le corps (24.1) ou formé par le corps.

**11.** Compresseur (2) selon l'une des revendications 7 à 10, **caractérisé en ce que** le ou chacun des tubes de Pitot (36 ; 136) est une antenne de Prandtl équipée de capteurs (38.1, 38.2, 40.1, 40.2 ; 138, 140) pour mesurer la pression statique, la pression totale, la température statique et la température totale.

**12.** Compresseur (2) selon la revendication 11, **caractérisé en ce que** l'antenne de Prandtl comprend une première chambre (136.5) apte à mesurer la pression et la température totale du fluide et une deuxième chambre (136.6) apte à mesurer la pression et la température statique dudit fluide.

**13.** Compresseur (2) selon l'une des revendications 11 et 12, **caractérisé en ce que** les capteurs de mesure de la pression et la température statiques, et/ou les capteurs de mesure de la pression et de la température totale sont combinés sur un seul composant (138, 140), respectivement.

**14.** Compresseur (2) selon l'une des revendications 11 à 13, **caractérisé en ce que** le coefficient de Laplace $\gamma$ est déterminé par la relation :

$$\frac{p}{p_t} = \left(\frac{T}{T_t}\right)^{\frac{\gamma}{\gamma-1}}$$

où $T$ est la température statique, $T_t$ la température totale, et $p$ la pression statique et $p_t$ la pression totale.

15. Compresseur (2) selon l'une des revendications 6 à 14, **caractérisé en ce que** l'unité de contrôle (37) est configurée pour calculer un rendement $\eta_{c\ étage}$ d'au moins un étage de compression de la turbomachine suivant la relation :

$$\eta_{c\ étage} = \frac{T_{01}\left(\left(\frac{p_{03}}{p_{01}}\right)^{\frac{\gamma-1}{\gamma}} - 1\right)}{T_{03} - T_{01}}$$

où $T_{01}$ est la température totale mesurée à l'entrée du ou des étages de compression, $p_{03}$ est la pression totale mesurée à la sortie du ou des étages de compression, et $p_{01}$ est la pression mesurée à l'entrée du ou des étages de compression.

**Patentansprüche**

1. Ein Verfahren zum Prüfen und/oder Kontrolle des Betriebs eines axialen Turbomaschineverdichters (2), durch den ein Gasstrom (18) strömt, wobei das Verfahren die folgenden Schritte umfasst:

- Messung der Betriebsparameter der Turbomaschine, wobei diese Parameter den Druck des Gasstroms an verschiedenen axialen Positionen umfassen;
- Berechnung der Betriebsbedingungen der Turbomaschine auf Basis der gemessenen Parameter und des Laplace-Koeffizienten $\gamma$ des durch die Turbomaschine strömenden Gases;

**dadurch gekennzeichnet, dass**

die Messung der Parameter eine Temperaturmessung des Gasstroms (18) umfasst; und
die Berechnung der Betriebsbedingungen eine Bestimmung des Laplace-Koeffizienten y auf der Grundlage der Temperaturmessung des Gasstroms (18) umfasst.

2. Verfahren nach Anspruch 1, **dadurch gekennzeichnet, dass** die Temperaturmessung des Gasstroms in einem oder mehreren Pitot-Rohren (36; 136) und vorzugsweise mindestens eine der Druckmessungen in dem einen oder mindestens einem der Pitot-Rohre (36; 136) durchgeführt wird.

3. Verfahren nach Anspruch 2, **dadurch gekennzeichnet, dass** das oder mindestens eines der Pitot-Rohre (36) in der Turbomaschine zwischen zwei Verdichtungsstufen oder zwischen zwei Expansionsstufen angeordnet ist.

4. Verfahren nach einem der Ansprüche 1 - 3, **dadurch gekennzeichnet, dass** die Temperaturmessung die statische Temperatur $T$ und die Gesamttemperatur $T_t$ umfasst und die Druckmessung den statischen Druck $p$ und den Gesamtdruck $p_t$ umfasst, wobei der Laplace-Koeffizient y nach folgender Formel bestimmt wird:

$$\frac{p}{p_t} = \left(\frac{T}{T_t}\right)^{\frac{\gamma}{\gamma-1}}$$

5. Verfahren nach einem der Ansprüche 1 - 4, **dadurch gekennzeichnet, dass** die Berechnung der Betriebsbedingungen eine Berechnung des Wirkungsgrades $\eta_{c,\ Stufe}$(etage) einer Verdichtungsstufe der Turbomaschine nach folgender Formel umfasst:

$$\eta_{c\,\acute{e}tage} = \frac{T_{01}\left(\left(\frac{p_{03}}{p_{01}}\right)^{\frac{\gamma-1}{\gamma}} - 1\right)}{T_{03} - T_{01}}$$

wobei $T_{01}$ die am Eingang der Verdichtungsstufe gemessene Gesamttemperatur, $p_{03}$ der am Ausgang der Verdichtungsstufe gemessene Gesamtdruck und $p_{01}$ der am Eingang der Verdichtungsstufe gemessene Druck ist.

6. Axialer Turbomaschinenverdichter (2), umfassend

   - eine Vielzahl von Verdichtungsstufen, wobei jede Stufe eine Reihe von Rotorschaufeln (24) umfasst, die geeignet sind, einen sie durchströmenden Luftstrom (18) zu beschleunigen, gefolgt von einer Reihe von Statorschaufeln (26), die geeignet sind, den Luftstrom zu richten; und
   - eine Steuereinheit (37),
   **dadurch gekennzeichnet, dass** der Verdichter außerdem umfasst:

   - mindestens einen Temperatursensor (38.1, 40.1; 138, 140) zur Temperaturmessung des Luftstroms (18), der zwischen zwei Verdichtungsstufen angeordnet ist;

   und dadurch, dass
   die Steuereinheit dazu ausgelegt ist, den Laplace-Koeffizienten y der Luft auf der Grundlage der Temperaturmessung des Luftstroms (18) zu bestimmen.

7. Verdichter (2) nach Anspruch 6, **dadurch gekennzeichnet, dass** der oder die Temperatursensoren (38.1, 40.1; 138, 140) in einem im Luftstrom (18) angeordneten Staurohr (36; 136) angeordnet sind.

8. Verdichter (2) nach Anspruch 7, **dadurch gekennzeichnet, dass** der Verdichter ein äußeres Gehäuse (28) umfasst, das den Luftstrom (18) begrenzt und die Statorschaufeln (26) trägt, wobei das oder mindestens eines der Pitot-Rohre (36) an einer Innenseite des Gehäuses und zwischen zwei benachbarten Statorschaufeln (26) derselben Reihe angeordnet ist.

9. Verdichter (2) nach Anspruch 6, **dadurch gekennzeichnet, dass** :

   - mindestens eine der Schaufeln (24) einen Körper (24.1) mit zwei einander gegenüberliegenden aerodynamischen Flächen (24.2, 24.3) sowie eine Vorderkante (24.4) und eine Hinterkante (24.5) aufweist, wobei diese Kanten die beiden aerodynamischen Flächen (24.2, 24.3) verbinden; und
   - das Pitot-Rohr (136) auf Höhe der Vorderkante (24.4) mündet.

10. Verdichter (2) nach Anspruch 9, **dadurch gekennzeichnet, dass** das Pitot-Rohr (136) eine Leitung (136.1) mit einer Einströmöffnung (136.3) für das Fluid umfasst, wobei die Leitung in den Körper (24.1) eingesetzt oder durch den Körper gebildet ist.

11. Verdichter (2) nach einem der Ansprüche 7 bis 10, **dadurch gekennzeichnet, dass** das oder jedes der Pitot-Rohre (36; 136) eine Prandtl-Antenne ist, die mit Sensoren (38.1, 38.2, 40.1, 40.2; 138, 140) zur Messung des statischen Drucks, des Gesamtdrucks, der statischen Temperatur und der Gesamttemperatur ausgestattet ist.

12. Verdichter (2) nach Anspruch 11, **dadurch gekennzeichnet, dass** die Prandtl-Antenne eine erste Kammer (136.5) zur Messung des Drucks und der Gesamttemperatur des Fluids und eine zweite Kammer (136.6) zur Messung des Drucks und der statischen Temperatur des Fluids umfasst.

13. Verdichter (2) nach einem der Ansprüche 11 bis 12, **dadurch gekennzeichnet, dass** die Sensoren zur Messung des statischen Drucks und der Temperatur und/oder die Sensoren zur Messung des Gesamtdrucks und der Temperatur jeweils auf einem einzigen Bauteil (138, 140) zusammengefasst sind.

14. Verdichter (2) nach einem der Ansprüche 11 bis 13, **dadurch gekennzeichnet, dass** der Laplace-Koeffizient y nach folgender Formel bestimmt wird:

$$\frac{p}{p_t} = \left(\frac{T}{T_t}\right)^{\frac{\gamma}{\gamma-1}}$$

wobei $T$ die statische Temperatur, $Tt$ die Gesamttemperatur und $p$ der statische Druck und $pt$ der Gesamtdruck ist.

**15.** Verdichter (2) nach einem der Ansprüche 6 bis 14, **dadurch gekennzeichnet, dass** die Steuereinheit (37) so ausgelegt ist, dass sie einen Wirkungsgrad $\eta c_{Stufe}$ (*etage*) mindestens einer Verdichtungsstufe der Turbomaschine nach der folgenden Formel berechnet wird:

$$\eta_{c\,\acute{e}tage} = \frac{T_{01}\left(\left(\frac{p_{03}}{p_{01}}\right)^{\frac{\gamma-1}{\gamma}} - 1\right)}{T_{03} - T_{01}}$$

wobei $T_{01}$ die am Eingang der Verdichtungsstufe oder -stufen gemessene Gesamttemperatur ist, $p_{03}$ der am Ausgang der Verdichtungsstufe oder -stufen gemessene Gesamtdruck und $p_{01}$ der am Eingang der Verdichtungsstufe oder - stufen gemessene Druck ist.

## Claims

1. A method of testing and/or checking the operation of an axial turbomachine (2) through which a gas stream (18) passes, the method comprising the following actions:

   - measuring the operating parameters of the turbomachine, said parameters including the pressure in the gas stream at different axial positions;
   - calculating the operating conditions of the turbomachine on the basis of the measured parameters and the Laplace coefficient y of the gas passing through the turbomachine;

   **characterised in that**

   the measurement of parameters comprises a measurement of the temperature of the gas stream (18); and the calculation of operating conditions comprises a determination of the Laplace coefficient y on the basis of the measurement of the temperature of the gas stream (18).

2. Method according to claim 1, **characterised in that** the temperature measurement of the gas stream is carried out in one or more Pitot tubes (36; 136), and preferably at least one of the pressure measurements is carried out in the one or at least one of the Pitot tubes (36; 136).

3. Method according to claim 2, **characterised in that** the or at least one of the Pitot tubes (36) is located inside the turbomachine between two compression stages or between two expansion stages.

4. Method according to one of claims 1 - 3, **characterised in that** the temperature measurement comprises the static temperature $T$ and the total temperature $T_t$, and the pressure measurement comprises the static pressure $p$ and the total pressure $p_t$, the Laplace coefficient $\gamma$ being determined using the following formula :

$$\frac{p}{p_t} = \left(\frac{T}{T_t}\right)^{\frac{\gamma}{\gamma-1}}$$

5. Method according to one of claims 1 - 4, **characterised in that** the calculation of operating conditions comprises a calculation of the efficiency $\eta_{c\,\acute{e}tage}$ of a compression stage of the turbomachine according to the following formula:

$$\eta_{c\,\acute{e}tage} = \frac{T_{01}\left(\left(\frac{p_{03}}{p_{01}}\right)^{\frac{\gamma-1}{\gamma}} - 1\right)}{T_{03} - T_{01}}$$

where $T_{01}$ is the total temperature measured at the inlet of the compression stage, $p_{03}$ is the total pressure measured at the outlet of the compression stage, and $p_{01}$ is the pressure measured at the inlet of the compression stage.

6. Axial turbomachine compressor (2), comprising

- a plurality of compression stages, each stage comprising a row of rotor blades (24) capable of accelerating a stream of air (18) passing through it, followed by a row of stator blades (26) capable of straightening said stream of air; and
- a control unit (37),

**characterised in that** the compressor further comprises:

- at least one temperature sensor (38.1, 40.1; 138, 140) for measuring the temperature of the air stream (18), located between two compression stages; and **in that**
- the control unit is configured to determine the Laplace coefficient y of the air on the basis of the measurement of the temperature of the air stream (18).

7. Compressor (2) according to claim 6, **characterised in that** the one or each of the temperature sensors (38.1, 40.1; 138, 140) is located inside a Pitot tube (36; 136) arranged in the air stream (18).

8. Compressor (2) according to claim 7, **characterised in that** said compressor comprises an outer casing (28) delimiting the air stream (18) and supporting the stator blades (26), the or at least one of the Pitot tubes (36) is arranged on an inner face of the casing and between two adjacent stator blades (26) of the same row.

9. Compressor (2) according to claim 6, **characterised in that** :

- at least one of the blades (24) comprises a body (24.1) with two aerodynamic faces (24.2, 24.3) opposite each other and a leading edge (24.4) and a trailing edge (24.5), said edges connecting the two aerodynamic faces (24.2, 24.3); and
- the Pitot tube (136) opens out at the level of the leading edge (24.4).

10. Compressor (2) according to claim 9, **characterized in that** the Pitot tube (136) comprises a conduit (136.1) with an inflow orifice (136.3) for the fluid, said conduit being inserted into the body (24.1) or formed by the body.

11. Compressor (2) according to one of claims 7 - 10, **characterized in that** the or each of the Pitot tubes (36; 136) is a Prandtl antenna equipped with sensors (38.1, 38.2, 40.1, 40.2; 138, 140) for measuring the static pressure, the total pressure, the static temperature and the total temperature.

12. Compressor (2) according to claim 11, **characterised in that** the Prandtl antenna comprises a first chamber (136.5) capable of measuring the pressure and the total temperature of the fluid and a second chamber (136.6) capable of measuring the pressure and the static temperature of said fluid.

13. Compressor (2) according to one of claims 11 - 12, **characterised in that** the sensors for measuring the static pressure and temperature, and/or the sensors for measuring the total pressure and temperature are combined on a single component (138, 140), respectively.

14. Compressor (2) according to one of claims 11 - 13, **characterised in that** the Laplace coefficient y is determined using the following formula:

$$\frac{p}{p_t} = \left(\frac{T}{T_t}\right)^{\frac{\gamma}{\gamma-1}}$$

where $T$ is the static temperature, $T_t$ the total temperature, and $p$ the static pressure and $p_t$ the total pressure.

15. Compressor (2) according to one of claims 6 - 14, **characterised in that** the control unit (37) is configured to calculate an efficiency $\eta_{c\ \acute{e}tage}$ of at least one compression stage of the turbomachine according to the following formula:

$$\eta_{c\ \acute{e}tage} = \frac{T_{01}\left(\left(\frac{p_{03}}{p_{01}}\right)^{\frac{\gamma-1}{\gamma}} - 1\right)}{T_{03} - T_{01}}$$

where $T_{01}$ is the total temperature measured at the inlet of the compression stage or stages, $p_{03}$ is the total pressure measured at the outlet of the compression stage or stages, and $p_{01}$ is the pressure measured at the inlet of the compression stage or stages.

Fig. 1

Fig. 2

Fig. 3

Fig. 4

Fig. 5

Fig. 6

## RÉFÉRENCES CITÉES DANS LA DESCRIPTION

**Documents brevets cités dans la description**

- GB 811854 A
- US 20110112797 A1
- JP S6248999 A
- JP H10132842 A